Europäisches Patentamt

European Patent Office

Office européen des brevets

(19)

(11) Publication number: **0 197 919**

**B1**

(12)     EUROPEAN PATENT SPECIFICATION

(45) Date of publication of patent specification: 26.10.88

(51) Int. Cl.⁴: **B 65 G 15/04,** B 65 G 19/00

(21) Application number: 84901826.2

(22) Date of filing: 13.04.84

(86) International application number:
PCT/SE84/00143

(87) International publication number:
WO 85/02831 04.07.85 Gazette 85/15

(54) CONVEYOR, PARTICULARLY FORMED FOR GRAIN-SHAPED MATERIAL.

(30) Priority: 21.12.83 SE 8307059

(43) Date of publication of application:
22.10.86 Bulletin 86/43

(45) Publication of the grant of the patent:
26.10.88 Bulletin 88/43

(84) Designated Contracting States:
AT DE FR GB NL

(56) References cited:
CA-A-1 045 073
CH-A- 624 359
DE-C- 805 255
DK-B- 146 531
FR-A-1 067 258
GB-A-2 064 461
SE-A-8 207 029
US-A-3 219 173

(73) Proprietor: GJERVALDSÄTER, Sixten
Söderholmsgränd 99
S-127 42 Skärholmen (SE)

(72) Inventor: GJERVALDSÄTER, Sixten
Söderholmsgränd 99
S-127 42 Skärholmen (SE)

(74) Representative: Jacobsson, Rune et al
JACOBSSON & BILLBERG PATENTBYRA AB Box
21113
S-100 31 Stockholm 21 (SE)

Courier Press, Leamington Spa, England.

## Description

The present invention relates to a conveyor having for its effective operation divided material flows, consisting of a housing; an inlet to the housing for the material to be conveyed; a driven endless belt arranged within said housing; dog profiles fixed transversely on the outside of the belt spaced apart from each other; and at least one outlet from the conveyor for said material (see for example US—A—3219173).

For a long time it has been known to convey grain-shaped material, for instance corns and the like, along a trough by means of an endless chain driven by a chain wheel, to which chain dog wings are fixed projecting outwardly from both sides of the chain. The dog wings run in the trough and convey the material therein. The chain only allows slow running action and is very heavy and expensive. Only for its own transport over 30% of the total power supplied to the conveyor is required. From a milieu point of view the chain conveyor is disturbing with considerable noise.

It is also known to, instead of a chain, use one or several wire ropes running in parallel, to which cross rods are fixed by means of some clamping method. The drive takes place by means of drive wheels having recesses for cross rods or clamp devices. The conveying method only allows slow speed with large weight of conveyed material per trough length and expensive supporting construction.

It is also known to have, instead of chain and wire ropes, a belt having V-formed cross section and provided with transverse rods. The drive takes place by means of drive wheels having a V-formed groove adapted to the belt. Such a conveyor driven with very high belt velocities implies complicated strength problems with accompanying unsafety in operation.

It is an object of the present invention to provide an endless conveyor of the kind mentioned in the introductory paragraph which is silent and requires very low power and which can be driven with a comparatively high speed (at least 3 times higher speed than a chain conveyor) during a long period with maximum transport of grain-shaped material such as corns, fodder-flower etc. To achieve this the invention is characterized as stated in the following claims.

The invention is described more in detail with reference to the enclosed drawings illustrating some embodiments, in which:

Fig. 1 is a vertical section through a conveyor according to the invention;

Fig. 2 shows the conveyor from above;

Fig. 3 is a side view illustrating a portion of a belt having transverse dog profiles;

Fig. 4 illustrates a section through a belt and transverse dog profile;

Fig. 5 shows in larger scale an exemplified fastening of a dog profile;

Fig. 6 is a section along line VI—VI in Fig. 1;

Fig. 7 is a section along line VII—VII in Fig. 1;

Fig. 8 is a section along line VIII—VIII in Fig. 1;

Fig. 9 illustrates a portion of the conveyor provided with a guide means;

Fig. 10 illustrates a portion of the conveyor provided with a modified guide means.

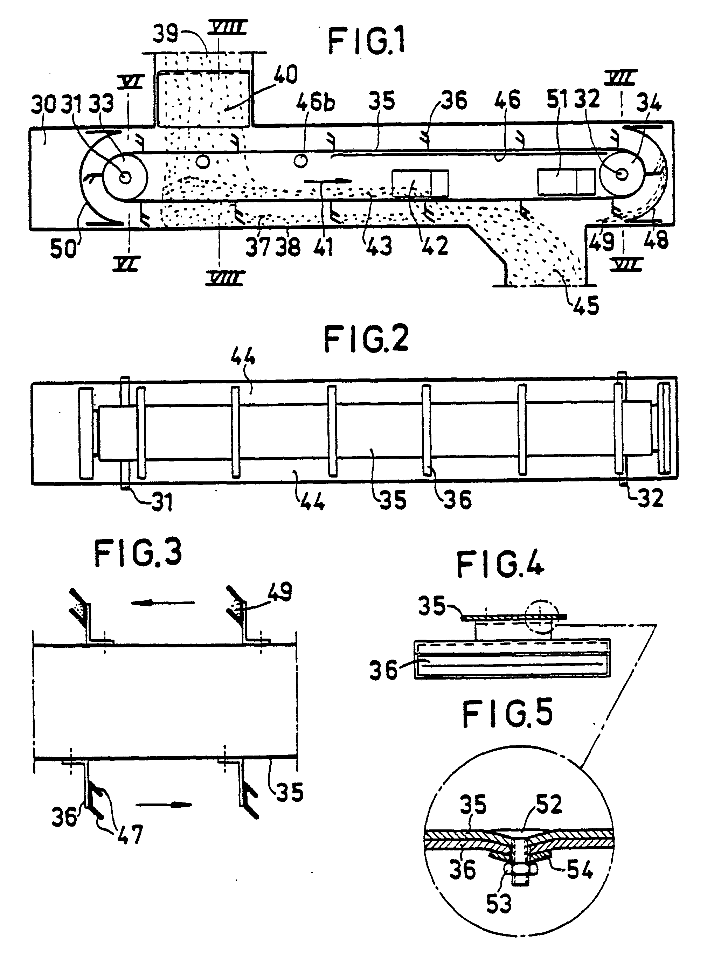

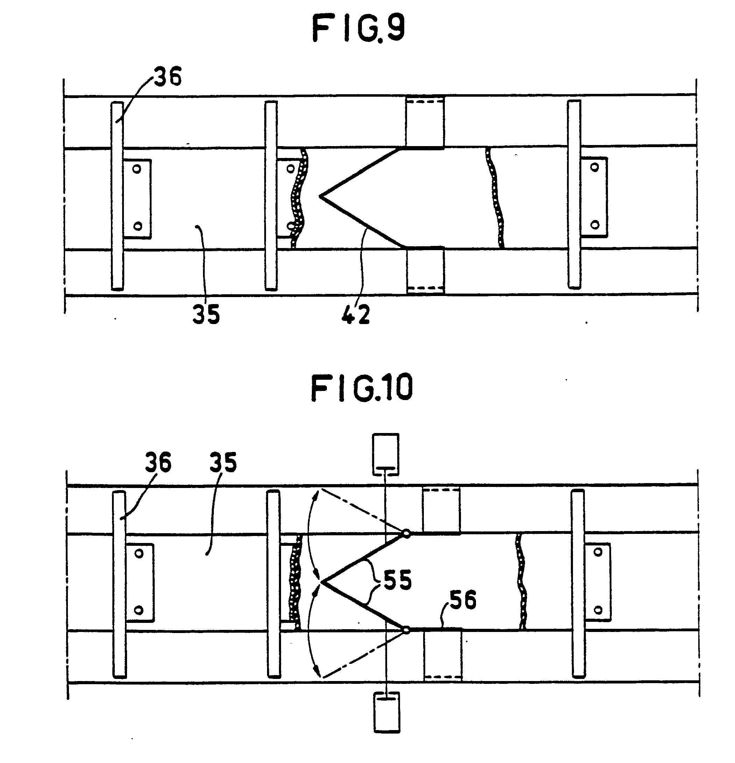

As appears from Figs. 1 and 2 a housing or trough 30 is at opposite ends provided with shafts 31, 32, on which pulley wheels 33, 34 are mounted. One of the pulleys is driven and the other runs freely. A belt 35 having a width adapted in relation to the housing, has transverse dog profiles 36 fixed to its outer surface. The dog profiles form interspaces 37 between the belt and the bottom of the housing 38. An inlet 39 feeds the material over a distributor 40 (see Fig. 8) past the upper belt run, so that the material is collected on the bottom of the housing as well as up onto the upper surface of the lower belt run. Two separate material flows are established in the conveying direction, arrow 41, one flow fed by means of the dog profiles along the bottom of the housing and in the interspeces 37 and the other flow 43 fed on the upper surface of the lower part. A distributor 42, arranged at chosen position and preferably just ahead of outlet 45 feeds the material 43 away from the belt and downwardly through gaps 44 between the belt and the side walls of the housing, so that a common material flow is formed which is conveyed along the bottom of the housing towards the outlet 45. The upper run of the belt is supported by a support plate 46 fastened to the side walls of the housing, or rolls 46b, the shafts of which are journalled in the side walls of the housing. The shaft 31 is mounted in bearings which are adjustable in the longitudinal direction of the housing. The shaft 32 is mounted in bearings and can be driveable by means of a motor with reduction gear. In order to avoid that large quantities of material-waste will be transferred to the drive end, the dog profiles have, as best shown in Fig. 3, inclined surfaces 47. Semi-circular shaped deflector 48 guides the waste material 49 at the drive end and this material is brought back to the opposite end of the housing, where a semi-circular deflector 50 can be arranged. A brush or scrape device 51 can be positioned immediately ahead of the drive pulley 34 in order to clean the belt.

It should be realized, that the belt with its low weight and the dogs made of material having low friction qualities affords a conveyor with very low demands.

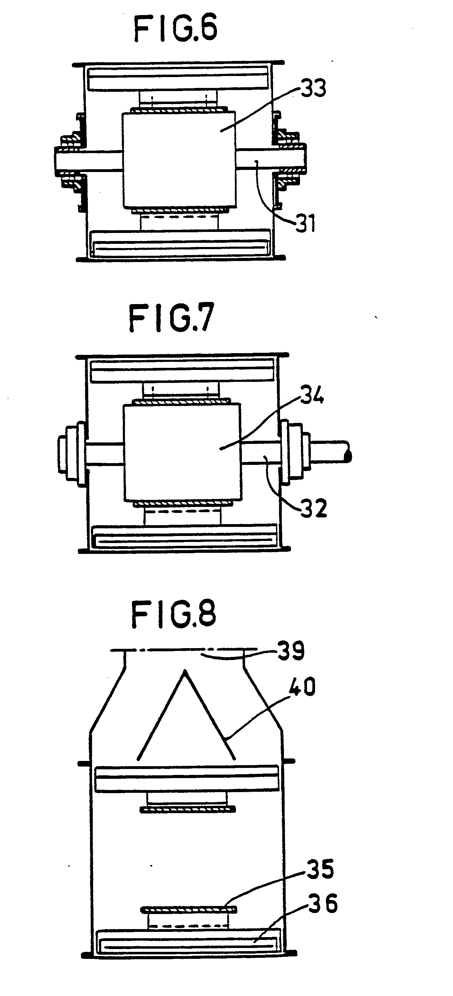

Figs 3 and 4 show in larger scale a belt 35 provided with dog profiles 36. The belt can be made of rubber or any other appropriate material, homogeneous or perforated with small holes or close-meshed. An appropriate belt may consist of rubber belt reinforced with synthetic material or steel-wires having inconsiderable elongation upon loading. The dog profiles 36 can be made of steel, wood, rubber or synthetic material and have a cross section for instance as shown in Fig. 3. The width of the dog profiles is adapted with appropriate clearance to the side walls of the housing. For instance each tenth dog can be wider than the remaining dogs for guiding the belt against the side walls of the housing and be provided with brushes or scrapes for cleaning the bottom of the housing. Moreover, it can be appropriate to form both ends of the dog profiles closed.

Fig. 5 shows in larger scale a particularly appropriate way of fastening the dog profiles 36 to the belt 35 by means of a dipped screw 52, nut 53 and dish-formed washer 54.

Fig. 6 shows a section along the line VI—VI in Fig. 1 and shows the pulley 33 with its shaft 31 journalled in e.g. plates moveably arranged outside the side walls of the housing. The pulley can have a smooth or bombarded surface and be made of steel, wood or some other material.

Fig. 7 shows a section along the line VII—VII in Fig. 1 and shows the drive pulley and the drive shaft journalled for instance outside the side walls of the housing. The drive pulley can be smooth or bombarded and the drive surface can be friction coated, transversely slotted or have some other friction-promoting form. It can be made of steel, wood or some other material.

Fig. 8 shows a section along the line VIII—VIII in Fig. 1 and shows a distributor 40 in the inlet 39 to the conveyor in order to guide the material laterally of the upper belt part. The distributor can preferably be made of steel or some other material and be fastened to the front and back walls of the inlet.

Fig. 9 shows one embodiment of a guide means 42 for laterally guiding the material on the upper surface of the lower belt part. This guiding means can be made of steel or some other material and be fastened to the side walls of the housing.

Fig. 10 shows a modified guide means which is openable for letting through the material flow 43 (Fig. 1), if desired. The sides 55 of said guide means are pivoted to back flanks 56 and opening-closing takes preferably place by means of air pressure cylinders.

The invention is not limited to the embodiments described above and shown on the drawings, but can be varied in different ways within the scope of the following claims. For instance a belt can have a width corresponding to the width between the side walls of the housing and the gaps or openings 44 can then be formed for instance by widening the side walls outwardly at appropriate positions.

## Claims

1. Conveyor operating with divided material flows, particularly for feeding grain-shaped material, comprising a housing (30);

an inlet (39, 58) to the housing for the material to be conveyed;

a driven endless belt (35) arranged within the housing;

dog profiles (36) fixed substantially transversely on the outer side of the belt (35) spaced apart from each other; and

an outlet (45) from the conveyor for the fed material, characterized by said belt having a width adapted for conveying towards the outlet (45) a material flow (43) on the upper surface of the lower run of the belt and also adapted in relation to the side walls of the housing (30) for forming at least one gap opening (44) between the belt and the side walls;

means (40) for supplying a portion of the material to the upper surface of the lower run of the belt (35) for conveying said material flow (43) along this surface;

means (40) for supplying the remainder of the material supplied to the conveyor to interspaces (37) formed by the dog profiles (36) between the belt (35) and the bottom (38) of the housing (30) for conveying a material flow along the bottom in the interspaces; and

means (42) for removal of the material conveyed on the upper surface of the lower run of the belt (35) through said gap opening (44) to said material flow conveyed along the bottom (38) of the housing (30).

2. A conveyor according to claim 1, characterized in that said supplying means (40) for forming said material flows consists of one and the same structured element.

3. A conveyor according to claim 1 or 2, characterized in that said gap opening (44) extends along substantially the whole length of the lower run of the belt (35) at least on one side thereof.

4. A conveyor according to any of the preceding claims, characterized in that the conveyor inlet (39) is provided with a distributor (40) formed for guiding the material supplied to the conveyor outside and past the upper run of the belt (35).

5. A conveyor according to any of the preceding claims, characterized in that the dog profiles (36) are provided with surfaces (47) inclined outwardly with an obtuse angle in relation to the belt (35).

6. A conveyor according to any of the preceding claims, characterized by deflector means (48) arranged at the belt end downstream of the conveyor outlet for cooperating with the dog profiles (36) for conveying by the dog profiles waste material (49) towards the opposite belt end.

7. A conveyor accordiong to any of the preceding claims, characterized in that the dog profiles (36) are fixed to the belt (35) by means (52) substantially flush with the inner surface of the belt (35).

8. A conveyor according to any of the preceding claims, characterized in that some of the dog profiles (36) have larger transverse length than the other dog profiles.

9. A conveyor according to any of the preceding claims, characterized in that said means (42) for removal of the material (43) conveyed on the upper surface of the lower run of the belt (35) is formed openable for allowing feeding through said means (42) of said material (43).

## Patentansprüche

1. Förderband, das mit geteilten Materialströmen arbeitet, insbesonders für das Fördern von getreideartigen Materialien, wobei das Förderband enthält:

ein Gehäuse (30);

einen Einlaß (39, 58) zum Gehäuse für das zu fördernde Material;

ein angetriebenes Endlosband (35), das innerhalb des Gehäuses angeordnet ist;

Mitnehmerprofile (36), die im wesentlichen quer an der Außenseite des Bands (35) voneinander beabstandet befestigt sind; und

einen Auslaß (45) vom Förderband für das geförderte Material, dadurch gekennzeichnet, daß

das Band eine Breite besitzt, die so eingerichtet ist, um eine Materialströmung (43) zum Auslaß (45) an der oberen Fläche des unteren Durchlaufs des Bands zu führen, und weiters im Hinblick auf die Seitenwände des Gehäuses (30) eingerichtet ist, um zwischen dem Band und den Seitenwänden zumindest eine Spaltöffnung (44) zu bilden;

eine Einrichtung (40) vorgesehen ist, um einen Teil des Materials der oberen Fläche des unteren Durchlaufs des Bands (35) zuzuführen, um die Materialströmung (43) längs dieser Fläche zu führen;

eine Einrichtung (40) vorgesehen ist, um das restliche dem Förderband zugeführte Material Zwischenräumen (37) zuzuführen, die von den Mitnehmerprofilen (36) zwischen dem Band (35) und dem Boden (38) des Gehäuses (30) gebildet werden, um eine Materialströmung längs des Bodens in den Zwischenräumen zu fördern; und

eine Einrichtung (42) vorgesehen ist, um das an der oberen Fläche des unteren Durchlaufs des Bands (35) geförderte Material durch die Spaltöffnung (44) zu jener Materialströmung zu beseitigen, die längs des Bodens (38) des Gehäuses (30) gefördert wird.

2. Förderband gemäß Anspruch 1, dadurch gekennzeichnet, daß die Zuführeinrichtung (40) für die Ausbildung der Materialströmung aus ein und dem selben Bauelement besteht.

3. Förderband gemäß Anspruch 1 oder 2, dadurch gekennzeichnet, daß die Spaltöffnung (44) im wesentlichen entlang der gesamten Länge des unteren Durchlaufs des Bands (35) zumindest an einer Seite davon verläuft.

4. Förderband gemäß jedem der bisherigen Ansprüche, dadurch gekennzeichnet, daß der Förderbandeinlaß (39) mit einer Verteileinrichtung (40) versehen ist, die ausgebilet ist, um das zugeführte Material zur Außenseite des Förderbands und über den oberen Durchlauf des Bands (35) zu führen.

5. Förderband gemäß jedem der bisherigen Ansprüche, dadurch gekennzeichnet, daß die Mitnehmerprofile (36) mit Flächen (47) versehen sind, die unter einem stumpfen Winkel zum Band (35) nach außen geneigt sind.

6. Förderband gemäß jedem der bisherigen Ansprüche, dadurch gekennzeichnet, daß am Bandende stromabwärts des Auslasses des Förderbands eine Ablenkeinrichtung (48) angeordnet ist, die mit den Mitnehmerprofilen (36) zusammenwirkt, um mit den Mitnehmerprofilen überschüssiges Material (49) zum gegenüberliegenden Bandende zu fördern.

7. Förderband gemäß jedem der bisherigen Ansprüche, dadurch gekennzeichnet, daß die Mitnehmerprofile (36) am Band (35) mit einer Einrichtung (52) befestigt sind, die im wesentlichen mit der Innenfläche des Bands (35) fluchtet.

8. Förderband gemäß jedem der bisherigen Ansprüche, dadurch gekennzeichnet, daß einige der Mitnehmerprofile (36) in Querrichtung eine größere Länge als andere Mitnehmerprofile besitzen.

9. Förderband gemäß jedem der bisherigen Ansprüche, dadurch gekennzeichnet, daß die Einrichtung (42) für die Beseitigung des Materials (43), das auf der oberen Fläche des unteren Durchlaufs des Bands (35) gefördert wird, öffenbar ausgebildet ist, um eine Förderung des Materials (43) durch diese Einrichtung (42) hindurch zu ermöglichen.

**Revendications**

1. Convoyeur fonctionnant avec des flux de matière séparés, en particulier pour le transport d'une matière en grains, comprenant:

un carter (30);

une entrée (39) dans le carter, pour la matière à transporter;

une bande sans fin (35) entraînée et disposée à l'intérieur du carter;

des palettes (36) fixées sensiblement transversalement sur la face extérieure de la bande (35) et espacées les unes des autres; et

une sortie (45) du convoyeur, pour la matière transportée; caractérisé en ce que

ladite bande a une largeur adaptée au transport, vers la sortie (45), d'un flux de matière (43) sur la surface supérieure du brin inférieur de la bande et également adpatée, par rapport aux parois latérales du carter (30), pour former au moins un intervalle ouvert (44) entre la bande et les parois latérales;

des moyens (40) sont prévus pour distribuer une partie de la matière sur la surface supérieure du brin inférieur de la bande (35), de manière à transporter ledit flux de matière (43) le long de cette surface;

des moyens (40) sont prévus pour distribuer le reste de la matière, amenée au transporteur, dans des espaces intermédiaires (37) définis par les palettes (36) entre la bande (35) et le fond (38) du cater (30), de manière à transporter un flux de matière le long du fond dans les espaces intermédiaires; et

des moyens (42) sont prévus pour évacuer la matière transportée sur la surface supérieure du brin inférieur de la bande (35), à travers ledit intervalle ouvert (44), vers ledit flux de matière transporté le long du fond (38) du carter (30).

2. Convoyeur suivant la revendication 1, caractérisé en ce que lesdits moyens de distribution (40) pour former lesdits flux de matière sont constitués d'un seul et même élément structurel.

3. Convoyeur suivant la revendication 1 ou 2, caractérisé en ce que ledit intervalle ouvert (44) s'étend sensiblement sur toute la longueur du brin inférieur de la bande (35), au moins sur un côté de celle-ci.

4. Convoyeur suivant l'une quelconque des revendications précédentes, caractérisé en ce que l'entrée (39) du convoyeur comporte un distributeur (40) formé de manière à guider la matière, amenée au convoyeur, vers l'extérieur et au-delà du brin supérieur de la bande (35).

5. Convoyeur suivant l'une quelconque des revendications précédentes, caractérisé en ce que les palettes (36) comportent des surfaces (47) inclinées vers l'extérieur et formant un angle obtus par rapport à la bande (35).

6. Convoyeur suivant l'une quelconque des revendications précédentes, caractérisé par un déflecteur (48) disposé à l'extrémité de la bande, à l'aval de la sortie du convoyeur, pour coopérer avec les palettes (36) de manière à transporter la matière perdue (49) vers l'extrémité opposée de la bande, au moyen des palettes.

7. Convoyeur suivant l'une quelconque des revendications précédentes, caractérisé en ce que les palettes (36) sont fixées sur la bande (35) par des moyens (52) qui affleurent sensiblement dans le plan de la surface intérieure de la bande (35).

8. Convoyeur suivant l'une quelconque des revendications précédentes, caractérisé en ce que certaines des palettes (36) ont une longueur transversale plus grande que celle des autres palettes.

9. Convoyeur suivant l'une quelconque des revendications précédentes, caractérisé en ce que lesdits moyens (42) pour évacuer la matière (43) transportée sur la surface supérieure du brin inférieur de la bande (35) sont prévus ouvrants, pour permettre le passage de ladite matière (43) à tavers lesdits moyens (42).

# FIG.1

# FIG.2

# FIG.3

# FIG.4

# FIG.5

# FIG.6

# FIG.7

# FIG.8

# FIG.9

36
35
42

# FIG.10

36   35
55
56